# EUROPEAN PATENT SPECIFICATION

(11) **EP 2 658 422 B1**
(45) Date of publication and mention of the grant of the patent: **16.10.2019**
(21) Application number: 11820869.3
(22) Date of filing: 27.12.2011
(51) Int. Cl.: A47J 36/32, A47J 27/00

(54) **METHODS AND DEVICES FOR COOKING RICE**
VERFAHREN UND VORRICHTUNGEN ZUM KOCHEN VON REIS
PROCÉDÉS ET DISPOSITIFS POUR LA CUISSON DE RIZ

(30) Priority: 31.12.2010 WO PCT/CN2010/080642; 09.10.2011 WO PCT/CN2011/080580
(43) Date of publication of application: 06.11.2013
(73) Proprietor: Koninklijke Philips N.V., 5656 AE Eindhoven (NL)
(72) Inventor: TAN, Jingwei, 5656 AE Eindhoven (NL); KHAW, Eng Cheng, 5656 AE Eindhoven (NL); ZHUANG, Qian, 5656 AE Eindhoven (NL)
(74) Representative: Coops, Peter
(86) International application number: PCT/IB2011/055974
(87) International publication number: WO 2012/090159

(56) References cited:
- EP-A2- 2 175 761
- WO-A1-2007/131410
- WO-A1-2008/155997
- CN-Y- 2 582 494
- JP-A- 2006 158 802

## Description

### Technical field

The present invention relates to kitchenware, particularly to a rice cooker.

### Background of the invention

Rice is a common staple food in East Asia. Nowadays there are various automatic rice cookers. A consumer just needs to wash the rice, mix the washed rice with a certain amount of water in one container in the rice cooker, and press the start button. The rice cooker heats the rice together with water in the container to the boiling temperature. As soon as the excess water is boiled off, the rice is cooked and the cooking operation is complete.

WO2007/131410A1 discloses a rice cooker in which a water tank 5 is provided on a side of an inner pot 4, in order to heat water before the water contacts the rice in the inner pot 4. However, according to WO2007131410A1, the inner pot 4 is heated only when there is hot water in the inner pot 4. WO 2009/016566 discloses a rice cooker which adds water in stages during the cooking process.

EP 2 175 761 A2 relates to a method of cooking food such as rice, wherein an actual cooking process is performed by heating the food under the influence of boiling water during a period of time, comprising a space for accommodating food, means for supplying water to the space, means for generating heat, and means for controlling a cooking process of the food.

### Summary of the invention

The invention is defined by the claims.

The cooking of rice is a complex process. For example, during the heating process, water and the ingredients of the rice such as starch will undergo a physical and a chemical change, for example, the physical change could be the starch absorbing water and expanding; the chemical change could be, for example, the pasting of the amylase. Besides, rice with different features, such as different species, will undergo a different physical and chemical change in water, since the ingredients of rice of different species are different. However, it can be seen that, with the exception of water being naturally vaporized during the boiling process, in the art the doses of water and rice are fixed throughout the cooking process, and as a consequence, the physical and chemical change of the rice in the water cannot be adjusted flexibly during the cooking process. Thus, the taste of the cooked rice is relatively fixed and cannot be adjusted flexibly.

Therefore, it would be advantageous to achieve a method and a device for cooking rice, which could provide cooked rice of an expected quality.

To address this concern, according to a first aspect of the invention, there is provided a method of cooking rice, comprising: obtaining information related to the rice; heating the rice together with water in a container; and, during the heating process, regulating the amount of water according to said information.

According to this aspect, the amount of water is regulated during the heating process according to the information related to the rice. Thus, the physical and chemical change of the rice being cooked in water is adjusted and therefore the quality of the cooked rice is controlled.

In a preferred embodiment, the obtaining step is carried out to obtain at least one of "features of the rice and target taste of cooked rice" as said information.

In this embodiment, in one case, the physical and chemical change of the rice are adjusted according to the features of the rice, such as species, so as to provide cooked rice corresponding to the features of the rice; in another case, the physical and chemical change of the rice are adjusted according to the target taste of cooked rice, so as to provide a flexible taste.

Considering that the physical and chemical changes take place differently in different stages of the heating process, these physical and chemical changes contribute differently to the taste of the cooked rice. To better control the taste of the cooked rice, in a preferred embodiment of the first aspect, the method further comprises, prior to the regulating step, a step of determining the amount of water to be used in the heating process according to said information; and said regulating step regulates the amount of water according to the determined amount of water.

A major ingredient of rice is starch including amylose and amylopectin. The different physical and chemical changes of amylose and amylopectin occur in different stages, and the different physical and chemical changes make different contributions to the taste of cooked rice. In a preferred embodiment, the amount of water is regulated in different stages through heating, causing the physical and chemical change of rice and water to be adjusted accurately according to the information. The stages of the heating process comprise at least one of: an amylose leaching-out stage, defined by a temperature range, in which range the leaching-out of amylose is the main phenomenon; an amylose pasting stage, defined by a temperature range, in which range the pasting of the amylose is the main phenomenon; an amylopectin water absorption stage, defined by a temperature range, in which range the water absorption of the amylopectin is the main phenomenon; a boiling stage, defined by a temperature at which the water is boiled, and a keeping warm stage, in which stage the rice has been cooked and is heated for keeping it warm. By regulating the amount of water in the different stages, the extent of the physical and chemical changes can be controlled according to the information related to the rice.

It is to be understood that the stages of the heating process could also be defined by parameters other than temperature, for example, by time, etc.

In a preferred embodiment of the first aspect, the regulating step regulates the amount of water by at least one of: draining at least part of the water from the container; adding water to the container.

Preferably, when the regulating step corresponds to adding water to the container, the method further comprises a step of determining the temperature of the water to be added and the time when the water should be added. Then, before adding water, the method further comprises a step of heating the water to be added to a temperature in accordance with the determined temperature. In this manner, the method controls the cooking stages more accurately by adding water of a suitable temperature, thus causing the physical and chemical changes between the starch and the water to be controlled more accurately, resulting in a more accurate taste.

In a preferred embodiment of the first aspect, the method further comprises the steps of: determining, for each of the stages, the time duration according to said information related to the rice; controlling the heating action in each of the stages according to the corresponding time duration determined for each of said stages. In this embodiment, the time duration of a given stage can be controlled, i.e. the degree of the physical and chemical change in the corresponding stage can be controlled more accurately to provide a target taste.

In a preferred embodiment of the first aspect, the target taste corresponds to at least one of: hardness; adhesiveness; resilience; cohesiveness; springiness; gumminess; chewiness etc. In this embodiment, various tastes can be provided, thereby further increasing the flexibility of the target taste.

In a second aspect of the invention, there is provided a device for cooking rice, comprising: a first container for containing the rice together with water; a first heater for heating the rice together with the water in the first container; and a regulator for, during the heating action, regulating the amount of water according to said information.

These and other features of the present invention will be described in detail in the embodiment part.

### Brief description of the drawings

Features, aspects and advantages of the present invention will become apparent by reading the following description of non-limiting embodiments with the aid of the appended drawings. In the drawings, same or similar reference numerals refer to the same or similar steps or means.
Fig. 1 shows a block diagram of a device 10 for cooking rice, according to an embodiment of the invention;
Fig. 2 shows a flowchart of the method of cooking rice, according to an embodiment of the invention;
Fig. 3 shows the effects of the water doses for different stages in the heating process on some tastes of the cooked rice;
Fig. 4 shows the effects of the water doses for different stages in the heating process on some other tastes of the cooked rice;
Fig. 5 shows a schematic view of a device 10 for cooking rice, according to an embodiment of the invention.

### Detailed description of embodiments

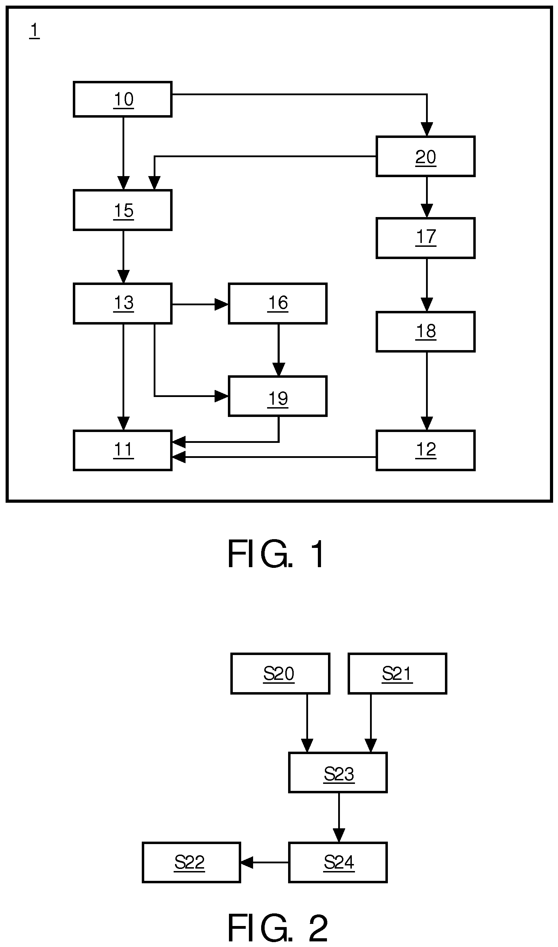

As shown in Fig. 1, the device 1 for cooking rice comprises:
- a first container 11, for containing rice and water;
- a first heater 12, for heating the rice and the water contained in the first container 11;
- a regulator 13 for, during the heating, regulating the amount of water in the first container 11.

Preferably, the device 1 further comprises a first unit 10 for obtaining information related to the rice, the regulator regulating the amount of water according to the obtained information.

Preferably, the device 1 further comprises a second unit 15, a third unit 17, a sixth unit 20, a second heater 16, a second container 19 for containing water and a controller 18. The function of these units will be described in the following part.

A method of cooking rice comprises: obtaining information related to the rice; heating the rice and water in the first container 11; and during said heating, regulating the amount of water according to the obtained information.

The device and method for cooking rice according to an embodiment of the invention will be elucidated by referring to Figures 1 to 5.

As shown in Fig. 2, first, in step S20, the first unit 10 obtains information related to the rice.

Specifically, in one embodiment, the first unit 10 obtains features of the rice as the information related to the rice. Preferably, the features of the rice correspond to at least one of:
- amount of the rice;
- species of the rice;
- freshness degree of the rice;
- region in which the rice is grown;
- quality of the rice.

The first unit 10 could comprise a user interface for receiving the features of the rice input by the users, or comprises sensors to detect the features of the rice. For example, the first unit includes a pressure sensor to detect the amount of the rice and an ultrasound sensor to detect the species of the rice. It should be noted that the features of rice are not limited to those stated above; and the sensor for detecting the different features of the rice is not subject to limitations, i.e. the skilled person could use any known sensor for this purpose, however, it will not be described in detail in the present invention.

In another embodiment, the first unit 10 obtains the target taste of the cooked rice as the information related to rice, i.e. the expected taste after the cooking process is complete. Preferably, the target taste corresponds to at least one of:
- hardness;
- adhesiveness;
- resilience;
- cohesiveness;
- springiness;
- gumminess; and
- chewiness.

In practice, the first unit 10 comprises a user interface for receiving data related to target taste input by the user, and this target taste may be a degree of one or more of the above taste features. Alternatively, the target taste input by the user may be a selection of the type of cooked rice from several predetermined menu selections, such as porridge, rice suitable for being fried, common rice to be cooked and then eaten, and so on; in the example, the first unit 10 correlates the menu selection with the degree of the above target tastes . Still, alternatively, after the first unit obtains the features of the rice, the first unit 10 may determine a target taste of cooked rice according to the features of the rice. For example, the first unit 10 determines high hardness and medium adhesiveness for Thai rice, or determines low hardness and high adhesiveness for glutinous rice (sticky rice). The relationship between the features of rice and the target taste is pre-stored in a memory of the device. It should be noted that the target taste of rice is not limited to the above listing, and that any taste-related features, e.g. gustatory, tactile, or olfactory, fall within the scope of the target taste.

The first unit 10 may also obtain a default target taste from a memory of the device 1 as the target taste in the case that there is no input from the user interface, or in the case that the input comprises wrong information. If the input comprises wrong information, the first unit 10 may also provide a reminder to the user and request the user to re-input.

It should be noted that the information related to the rice is not limited to the features of the rice and/or target taste of the cooked rice. The following part uses the target taste as the information related to the rice to elucidate the embodiments of the invention. Based on the teaching of the description, those skilled in the art could design other embodiments corresponding to other information related to the rice, however, this will not described in further detail herein.

The container 11 contains the rice and water. Then, in step S22, the first heater 12 heats the rice and the water in the container 11.

In one embodiment, as mentioned above, the different stages may correspond to different physical and chemical changes between the rice and the water during the heating process; and since the physical and chemical changes are different at different temperature stages, the stages of the heating process may be defined by the temperature which is associated with the status change of the rice and water during the heating process.

As an example of the effect on the taste that regulating the amount of water has, an experiment is performed by the inventor, during which an additional amount of water is added at different stages of the heating process.

A principal ingredient of rice is starch including amylose and amylopectin. Amylose and amylopectin react with the water during the heating process. For example, the leaching-out of amylose, the pasting of amylose, and the water-absorption of amylopectin occur during the heating process. And these physical and chemical changes contribute to different tastes of the cooked rice. With different doses of water involved in the physical and chemical changes, the degree of the physical and chemical changes varies, due to which the resulting taste of the cooked rice is different.

On the above basis, the heating process is divided into the following stages:
- an amylose leaching-out stage, defined by a first temperature range, in which range the main phenomenon is amylose leaching-out of the rice. The temperature during the leaching-out stage ranges from room temperature to the temperature at which the amylase pasting stage starts, which will be described below. For example, for some Japonica rice, it is from room temperature to 60°C; depending on the differences between the rice used, the temperature range is a bit different.
- an amylose pasting stage, defined by a second temperature range, in which range the main phenomenon is the pasting of the amylase. The temperature range of this stage starts from the temperature at which the pasting of the amylase becomes the main phenomenon instead of the amylose leaching-out stage, and this amylase pasting stage ends at the start of the amylopectin water absorption stage, which will be described below. For example, for some Japonica rice, the range of this stage is from 60°C to 80°C.
- an amylopectin water absorption stage, defined by a third temperature range, in which range water absorption of the amylopectin is the main phenomenon, and it starts when amylopectin starts to absorb water and substantially continues until the start of the boiling stage. For example, for some Japonica rice, this temperature range is from 80°C to 100°C.
- a boiling stage, defined by the boiling temperature, in which stage water and rice are kept boiling for a certain period. Generally, the temperature is around 100°C.
- a keeping warm stage at which the cooked rice is heated in order to be kept warm.

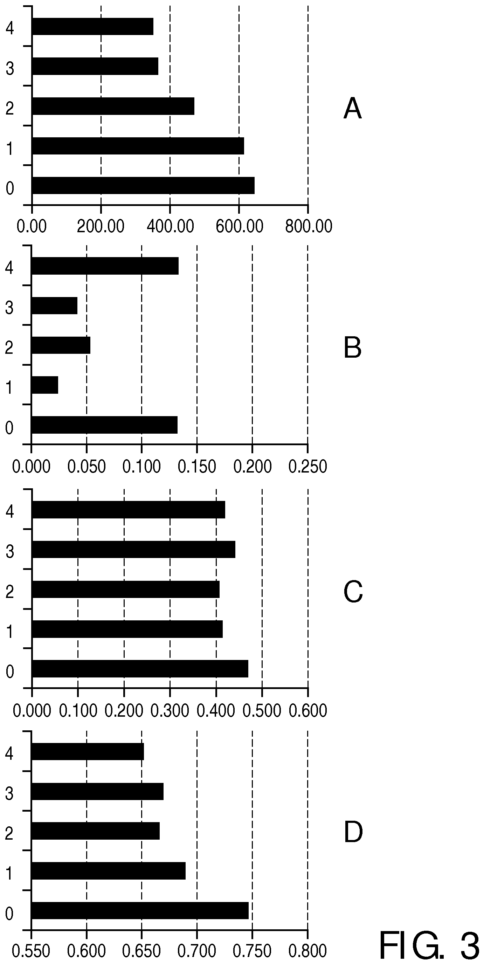

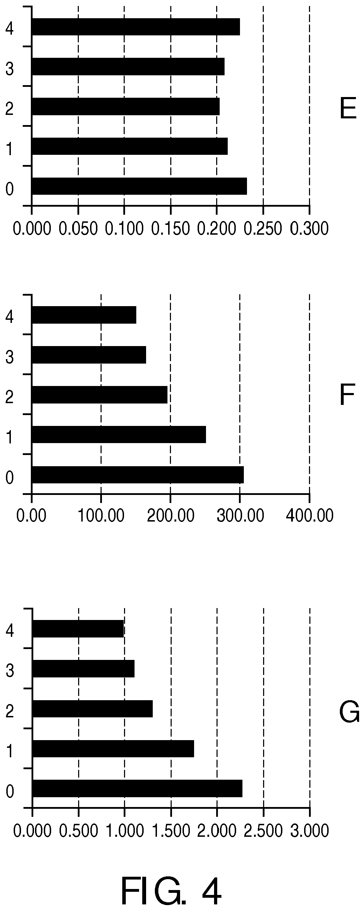

Figs. 3 and 4 illustrate the effects that regulating the amount of water in different heating stages has on the taste of cooked rice. In Fig. 3 and Fig. 4, the item 0 stands for a reference rice cooking scheme that uses 320g rice and 450ml water to cook the rice and that does not regulate the water dosing during the whole cooking process. The item 1 stands for the cooking scheme on the basis of the reference scheme 0, but with an additional 900ml water being added in the amylose leaching-out stage, in other words, in the amylose leaching-out stage of item 1, 320g rice and 1350ml water is used. Then the additional 900ml water is drained at the end of the amylase leaching-out stage. In the following stages, with respect to item 1, neither additional water is added nor additional water is drained. Similarly to item 1, items 2, 3 and 4 will add an additional 900ml water at the start of the amylose pasting stage, the amylopectin water absorption stage or the boiling stage respectively; and drain the additional water at the end of the respective stages. The charts A, B, C and D in Fig. 3 refer to the taste features: hardness, adhesiveness, cohesiveness and springiness respectively. The charts E, F and G in Fig. 4 refer to other taste features : resilience, gumminess and chewiness respectively. In the figures, the solid bars stand for the average quantified values of the corresponding taste features. The following table 1 gives the accurate quantified values shown in Fig. 3 and Fig. 4.

**Table 1**

| **Hardness** | | | | | |
|---|---|---|---|---|---|
| unit | g | | | | |
| | **0** | **1** | **2** | **3** | **4** |
| Average | 647.27 | 609.25 | 472.75 | 367.28 | 353.56 |

| **Adhesiveness** | | | | | |
|---|---|---|---|---|---|
| unit | mJ | | | | |
| | **0** | **1** | **2** | **3** | **4** |
| Average | 0.138 | 0.024 | 0.055 | 0.043 | 0.138 |

| **Cohesiveness** | | | | | |
|---|---|---|---|---|---|
| unit | | | | | |
| | **0** | **1** | **2** | **3** | **4** |
| Average | 0.475 | 0.417 | 0.410 | 0.444 | 0.429 |

| Springiness | | | | | |
|---|---|---|---|---|---|
| unit | mm | | | | |
| | **0** | **1** | **2** | **3** | 4 |
| Average | 0.743 | 0.685 | 0.666 | 0.671 | 0.651 |

| **Resilience** | | | | | |
|---|---|---|---|---|---|
| unit | | | | | |
| | **0** | **1** | **2** | **3** | **4** |
| Average | 0.234 | 0.213 | 0.205 | 0.216 | 0.224 |

| **Gumminess** | | | | | |
|---|---|---|---|---|---|
| unit | g | | | | |
| | **0** | **1** | **2** | **3** | **4** |
| Average | 307.26 | 256.89 | 195.49 | 164.96 | 152.45 |

| **Chewiness** | | | | | |
|---|---|---|---|---|---|
| unit | mJ | | | | |
| | **0** | **1** | **2** | **3** | **4** |
| Average | 2.241 | 1.733 | 1.283 | 1.093 | 0.979 |

It can be seen that the amount of water added in different stages influences the taste of cooked rice. For example, as to the hardness, additional water in one of the amylose pasting stage, the amylopectin water absorption stage and the boiling stage will decrease the hardness As to the adhesiveness, additional water in one of the amylose leaching-out stage, the amylose pasting stage and the amylopectin water absorption stage decreases the adhesiveness. Other effects on the taste of cooked rice caused by adding additional water in a certain stage is obvious from figures 3, 4 and the above table 1, and will not be described in detail in the present invention.

The above part reveals, by way of an example, the effect of regulating the dosing of water during any one of the heating stages on the taste of cooked rice. In the following, it will be explained by means of an embodiment of the invention, how the amount of water for each of the stages can be determined and regulated.

It should be noted that the temperature range of the different stages is not limited by the above example and may vary for rice with different features, for example different species, different freshness degree and so on.

The temperature range for the different stages could be pre-determined during the manufacture of the device 1 and pre-stored in a memory of the device 1. However, for one and the same stage, the temperature range may be different because of the different features of the rice used; therefore, the pre-stored temperature range for one stage may include more than one choice. Therefore, the method could further comprise a step for determining the temperature range for each of the stages. And in this embodiment, the device 1 further comprises the sixth unit 20 to determine the temperature range for each stage according to the features of the rice used.

In step S23, the second unit 15 determines, for a given stage, the amount of water to be used in the given stage, according to the target taste and/or the features of the rice obtained by the first unit 10. In one example, the target taste is low hardness, so that, based on the above experiment, the second unit 15 may decide to add more water than in a normal cooking process, i.e, additional water is added in at least one of the amylose pasting stage, the amylopectin water absorption stage and the boiling stage. In another case, the target taste is low hardness and low adhesiveness, so that, based on the above experiment, the second unit 15 may decide to add more water than in a normal cooking process, i.e, additional water is added in at least one the amylose pasting stage and the amylopectin water absorption stage. For either a different or the same target taste, there may be various schemes enabling regulating the amount of water in different stages; for the sake of simplicity, no further examples will be given of the invention.

The amounts of water, used in each of the stages, for providing a certain degree of the target taste can be determined by the manufacturer or vendor via experiments, and the mapping relationship between the amount of water in given stages and the corresponding target taste can be pre-stored into a memory of the device 1 and loaded by the second unit 15, or can be downloaded from the Internet by the second unit 15. In the case that the feature of the rice is used as the information related to the rice, the mapping relationship between the amount of water in given stages and the corresponding feature of the rice is pre-stored in a memory of the device 10 and loaded by the second unit 15. The amount of water to be added in different stages could be determined for example: at the beginning of the cooking process, when the first amount of water is added; then, during the amylose leaching-out stage an additional 10ml is added; and during the amylose pasting stage, 5ml is drained from the first container; and 2ml water is added after the cooked rice has been kept warm for 2 hours.

After the amount of water in each of the stages is determined, in step S24, during the heating step, the regulator 13 regulates the amount of water in a given stage, according to the determined amount of water corresponding to the given stage.

In practice, the device 1 may comprise a temperature sensor to detect the temperature of the rice and the water being heated in the first container 11. When the given stage is under way, for example, when the temperature sensor detects that the temperature of the rice and the water in the first container 11 reaches the temperature of the given stage, the regulator 13 regulates the amount of water in the first container for that given stage.

Specifically, the regulator 13 may comprise at least one of:
- a drainer connected to the first container 11, for draining at least part of the water from the first container 11;
- a fifth unit, for adding water into the first container 11.

In one example, when the amount of water in the first container 11 used for the previous stage exceeds the amount of water determined for the current stage, the drainer will drain the water from the container so as to meet the determined amount of water; the drainer may drain more water from the container 11, in which case the fifth unit adds new water into the container to compensate some of the drained water.

In another example, if the amount of water in the first container is less than the determined amount for the given stage, the fifth unit will add water to the container during the given stage. Since the added water is at a certain temperature, this may influence the temperature of the rice and the water in the first container 11; therefore, the second unit 15 may further determine the exact time to add the water during the given stage and to which temperature the water to be added should be heated. The exact time to add the water could be, for example, in the amylose pasting stage (60°C-80°C); the water should be added when the rice and the water in the first container 11 are heated to 70°C, which specifies the time point when water is to be added. The temperature of water to be added could be based on the temperature of the water and rice in the first container 11 in order to continue the cooking stage, for example, water of 70°C could be added into the container when the water temperature in the container is 70°C.

In the above example, the device 1 further comprises a second container 19 for containing water in addition to the first container 11, the second container 19 being part of the fifth unit for adding water into the first container. When the regulator 13 is informed about the determined amount of water and the temperature and time at which water is to be added, it controls the second heater 16 to heat the water in the second container 19 to the determined temperature and to subsequently add the water at the determined point in time.

For example, in the case that additional water is to be added during the amylopectin water absorption stage, the water may be introduced from the water tap in the kitchen and is heated to a temperature of for example 80°C by the second heater 16 before being added into the first container 11 by the regulator 13. When the amylopectin water absorption stage is over, the regulator 13 may drain water from the container so as to meet the water amount requirement determined for the boiling stage, and the heating process proceeds to the boiling stage.

In another embodiment, the regulator 13 may control the second heater 16 to heat the water to be added to a temperature in accordance with the stage after the current stage, in other words, to add water of a higher temperature in order to skip the current stage and go to the next stage because sometimes a certain temperature range is skipped to avoid typical physical and chemical changes in that certain temperature range, which could contribute to a specific taste. For example, when the amylose pasting stage is over and the amylopectin water absorption stage is about to start, i.e. the current temperature of the rice and water is around 80°C, the second heater 16 may heat the water to be added to 100°C. The regulator 13 drains all water having a temperature of 80°C from the container 11 and pours the water having a temperature of 100°C into the container 11. In this manner, the amylopectin water absorption stage is skipped, and this probably results in the taste of the inner layer of the cooked rice being different from that of the outer layer, thereby providing a unique taste. Adding water of a higher temperature than the current rice/water temperature will also allow quick and uniform heating, at the beginning of the cooking process, as compared to adding tap water at room temperature, which tap water must first be heated by the second heater and then added to the container 11.

In a preferred embodiment, the third unit 17 determines the time duration of each of the stages, according to the information related to the target taste of cooked rice or the features of the rice. And the controller 18 controls the first heater 12 to heat the rice and the water in the first container 11 according to the time duration determined for a given stage. In this manner, the degree of physical and chemical change occurring in the rice and the water in a given stage can be further controlled by controlling the time duration of the given stage, enabling a more accurate target taste to be provided.

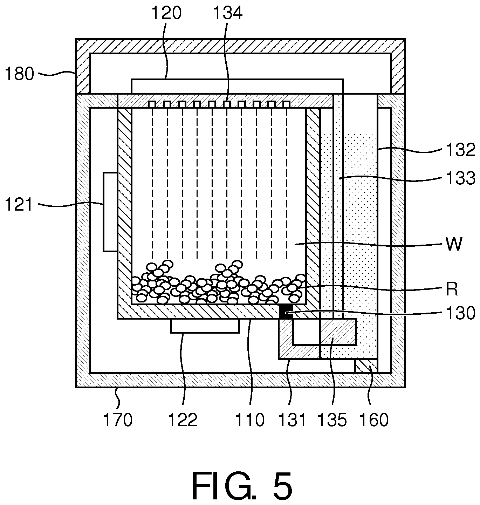

In practice, taking Fig. 5 as an example, the first heater 12 is implemented by three heaters 120, 121 and 122, and the controller 18 could switch on all three heaters at the start of a stage, such that the temperature in that stage is increased rapidly, so that the time duration of that stage is relatively short and fewer physical and chemical changes occur in that stage; or, the controller 18 just switches on one or two heaters in one stage and the time duration of that stage is relatively long and more physical and chemical changes occur in that stage.

In practice, the time duration for each of the stages, for providing a certain target taste, can be determined by the manufacturer or vendor via experiments, and the mapping of the time duration for the given stages and the obtained information like target taste or features of the rice can be pre-stored in a memory of the device 1 and loaded by the third unit 17, or can be downloaded from the Internet by the third unit 17.

In the case that the features of the rice are taken into consideration, the third unit 16 may determine further the time duration of a given stage according to the features of the rice used.

In this way, after the heating process in which the amount of water in different stages is regulated, the rice is cooked to provide the target taste. It should be noted that the natural vaporization of the water (in other words, during the heating process, the water is heated and then becomes vapor and disappears) is not considered as the regulation of the amount of water during the heating process.

Another embodiment of the invention aims to solve the technical problem that the quality of the cooked rice deteriorates during warm keeping. The conception of this embodiment is: after the rice has been kept warm and before the user wants to eat the rice, refreshing the rice by adding water and heating the rice with the water.

Specifically, after the rice has been cooked and kept warm for a certain period, according to the embodiment water is added to the cooked rice. Preferably, the amount of water added is determined in advance according to the amount of rice. This is advantageous if the rice has been partially removed, e.g. consumed by the user. A weight sensor can be used to measure the amount of remaining rice and a controller may be used for correlating a proper amount of water with the amount of remaining rice.

To achieve a better taste, the water to be added is at a temperature higher than that (for example 75°C) of the cooked rice being kept warm. Preferably, the temperatures of water and rice are equal. In one case, the rice can be kept warm at a temperature just above the starch retrograde temperature (about 60°C), and this can save energy. Thus, in this case the water to be added is at 60°C. The water can be heated to reach this temperature by the device 1, which will be elucidated later.

In the heating step, the rice with the water are heated to maintain the current temperature of the rice; or to increase the temperature of the cooked rice and added water. Preferably, the rice and water are heated to the boiling temperature.

The duration of the heating step can depend on the time during which the rice has been kept warm.

Below are some detailed results of the effect of this embodiment.

**Table 1**

| | Rice taste analyzer result | | |
|---|---|---|---|
| | score | Water Content | Note |
| Keep warm for 10 mins | 85.34 | 62.42% | |
| Keep warm for 100 mins | 84.52 | 61.27% | |
| Keep warm + this embodiment | 86.01 | 62.30% | add 40ml water at 75°C |
| Keep warm + this embodiment (consuming half of the rice) | 86.09 | 62.37% | add 30ml water at 75°C |

The result of the Rice Taste Analyser deteriorates when the rice is kept warm for 10 minutes to 100 minutes (as expected) . By carrying out the embodiment, the result of the Rice Taste Analyzer (which has been shown to correlate with subjective evaluation of the cooked rice quality) is improved. The water content is a key parameter in measuring the rice quality, and the best subjective taste result is obtained when the water content is between 62 and 63%. As shown above, the embodiment can improve the water content, which correlates with sensory quality. Subjective taste tests of rice processed according to the embodiment also show clear improvement of the subjective rice quality.

It should be noted that in these tests a relatively small amount of water is added, which already gives a clear improvement. The advantage of adding little water is that the solution is more robust when rice is removed.

In practice, the device 1 can be implemented as shown in Fig. 5. In said Figure, the first container 11 is implemented by an inner pot 110 in which the rice R and the water W are contained. The first heater 12 is implemented by three heaters 120, 121 and 122 which heat the inner pot 110 from above, from one side and from below, respectively. And the drainer of the regulator 13 is implemented by a draining valve 130 at the bottom of the inner pot 110; the fifth unit of the regulator 13 can be implemented by a water tank 132 which is the second container 19, a water pump 135, a water feeding pipe 133 and a plurality of nozzles 134, wherein the water tank 132 stores water, the water pump 135 pumps the water from the water tank 132 into the water feeding pipe 133, the water feeding pipe 133 conveys the water to the plurality of nozzles 134 at the top of the inner pot 110, and the plurality of nozzles 134 spray the water into the inner pot 110. The second heater 16 is implemented by a heater 160 at the bottom of the water tank 132. The device 1 further comprises an outer housing 170 and an upper lid 180. In this embodiment, there is a draining pipe 131 connecting the draining valve 130 and the water tank 132, such that the water drained from the inner pot 110 is recycled back to the water tank 132 for usage in later stages, and this solution saves the water used for cooking. In another embodiment, the draining valve 130 may connect to the sewer to discharge the water from the container into the sewer, and the water tank 132 may connect to the water tap in the kitchen and use fresh tap water.

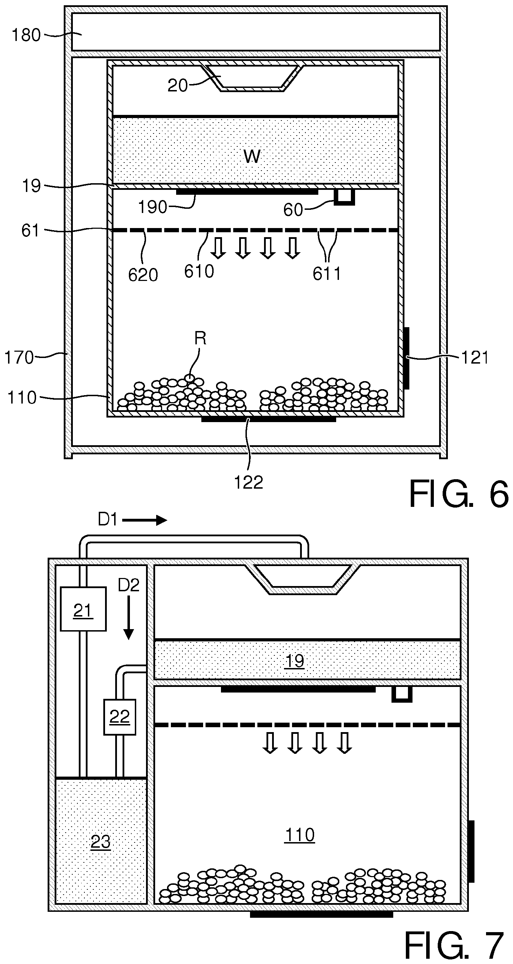

Since the pumping of hot water, such as water of 100 °C, makes it more difficult to implement device 1 and increases the cost thereof. Fig. 6 shows another preferred embodiment. In this embodiment, the fifth unit for adding water comprises a second container 19 is disposed above the container 11. There is a water inlet 20 for filling water into the second container 19. The second heater 190 is attached to the second container 19 from below. However, the second heater 190 may also be placed at any other location such as at a side. The device comprises a valve 60 at the bottom of the second container 19 and a spreading mechanism 61 under the valve 60. The valve 60 can be opened to allow the water in the second container 19 to flow downwards to the spreading mechanism 61, under the action of gravity. The spreading mechanism 61 can be implemented by a diaphragm 610 with a plurality of evenly distributed holes 611; the diaphragm 610 is above the first container 110 and allows the water to drop into the container 110. The spreading mechanism 61 can also be implemented by nozzles or in any other suitable way. This embodiment eliminates the need for pumping extremely hot water, thereby reducing the complexity and cost of device 1.

Further, the second container 19 can be fixed in the device 1, or can be detachable from the device 1 for easy cleaning.

In a further preferred embodiment, as shown in fig. 7, the device 1 further comprises a third container 23 for containing water. The third container 23 may be placed at the side of the first container 110. The third container 23 connects to the second container 19, via a first and a second flow path running, respectively upstream D1 (providing the second container with water) and downstream D2 (backflow from the second container) . The flow controllers 21 and 22 supply water to the second container 19 and the third container 23, respectively, through the flow paths. In an embodiment, the controller 21 is a pump in the first flow path between the third and the second container, and the controller 22 is a valve in the second flow path between the third and the second container. Generally, the water in the third container 23 is not at a high temperature, so that a normal pump can be used. It should be noted that the two flow paths for upstream and downstream, respectively, do not limit the invention, and only one path for both upstream and downstream, or more than two paths, are also applicable.

In the case that water needs to be added several times during the cooking process, the above embodiment is advantageous, because the water can be provided from the third container 23 to the second container 19 several times, with each time only a proper amount of water being provided. Specifically, the flow controller 21 delivers a given amount of water from the third container 23 to the second container 19, and the second heater heats the water in the second container 19 to a desired temperature. At a proper time as mentioned before, the fifth unit can add the heated water from the second container 19 into the first container 11 for cooking the rice. After that, there are additional rounds of adding hot water controlled by the flow controller 21. If any water remains in the second container 19 after the rice has been cooked, the valve 22 can be opened to enable water to flow back to the third container 23.

In the above operation, it is convenient to manipulate the water-dosing by employing fixed temperature and time settings, thereby also saving energy.

The above units can be implemented by way of software, hardware or a combination thereof. For example, the program codes for performing the functions of the first unit, the regulator, the second unit, the third unit, the controller and the fourth unit are stored in a memory. These codes are loaded and executed by a micro controller unit (MCU) which controls the device 1. In another example, certain IC chips perform the functions of these units, and these chips can be controlled by the MCU. Those skilled in the art could implement embodiments of the invention in various ways according to the concept and principle taught by the description.

Those of ordinary skill in the art can understand and realize modifications to the disclosed embodiments, through studying the description, drawings and appended claims. All such modifications which do not depart from the spirit of the invention are intended to be included within the scope of the appended claims. The word "comprising" does not exclude the presence of elements or steps not listed in a claim or in the description. The word "a" or "an" preceding an element does not exclude the presence of a plurality of such elements . In the practice of the present invention, several technical features in the claim can be embodied by one component. In the claims, any reference signs placed between parentheses shall not be construed as limiting the claim. An ordinal numeral such as "first", "second" used before the word "step" or "unit" is only for distinguishing different elements, and is not intended to suggest any order of the step or unit. In other words, it is just the name of the unit without any other special meaning.

## Claims

1. A device for cooking rice, comprising:
a first container (11) for containing the rice and water;
a first heater (12) for heating the rice and water in the first container (11);
a first unit (10) for obtaining information related to the rice;
a second unit (15) for determining the amount of water to be used in the heating process according to said information;
a regulator (13) for, during the heating, regulating the amount of water in the first container, wherein the regulator comprises an adding unit for adding water into the first container and a drainer connected to the first container (11) for draining at least a part of the water from the first container (11),
wherein the heating process comprises different stages including at least one of the following:
an amylose leaching-out stage, defined by a temperature range, in which range the leaching-out of the amylose is the main phenomenon;
an amylose pasting stage, defined by a temperature range, in which range the pasting of the amylase is the main phenomenon;
an amylopectin water absorption stage, defined by a temperature range, in which range the water absorption of the amylopectin is the main phenomenon;
a boiling stage, defined by a temperature at which the water is boiled; and
a keeping warm stage, in which the rice has been cooked and is heated to be kept warm;
wherein the second unit is for determining the amount of water to be used in the different stages,
wherein the regulator is for regulating the amount of water in the different stages,
wherein when the amount of water in the first container (11) used for the previous stage exceeds the amount of water determined for the current stage, the drainer is adapted to drain the water from the container so as to meet the determined amount of water; and
wherein when the amount of water in the first container (11) is less than the determined amount for the given stage, the adding unit is adapted to add water to the container during the given stage.

2. The device as claimed in claim 1, wherein the heating process comprises each of said stages.

3. The device as claimed in claim 1 or 2, wherein said first unit (10) is used for obtaining, as said information related to the rice, at least one of the following:
features of the rice;
target tastes of the cooked rice.

4. The device as claimed in any one of claims 1 to 3, wherein said adding unit further comprises a second container (19) for containing water to be added to the first container, and said device further comprises a second heater (16) for heating water in the second container (19).

5. The device as claimed in claim 4, wherein said second container (19) is disposed above said first container (11,110) in either a fixed manner or a detachable manner, and said adding unit further comprises:
a spreading mechanism for spreading water into the first container (11,110); and
a valve, for allowing water in the second container (19) to flow into the spreading mechanism.

6. The device as claimed in claim 5, further comprising:
a third container (20) for containing water, and being connected with said second container (19); and
a flow controller for controlling the delivery of water from said second container (19) to the third container (23) and vice versa.

7. The device as claimed in claim 6, wherein:
the flow controller is adapted to deliver a given amount of water from said third container (23) to said second container (19);
the second heater is adapted to heat the given amount of water in the second container (19); and
the adding unit is adapted to add the heated water from the second container into the first container.

8. A method for cooking rice by using a device according to any of claims 1 to 7, comprising:
obtaining (S20) information related to the rice;
heating (S22) the rice and water in a container; and
during the heating process (S22), regulating (S24) the amount of water according to said information,
wherein said regulating step (S24) regulates the amount of water by at least one of:
draining at least part of the water from the container;
adding water into the container.

9. The method as claimed in claim 8, wherein, before adding water, the method further comprises a step of determining the temperature of water to be added and the point in time when the water is to be added, and a step of heating the water to be added to the determined temperature and adding the heated water at the determined point in time.

10. The method as claimed in claim 8, wherein the method further comprises the steps of:
determining the time duration for each of the stages, respectively, according to said information related to the rice; and
controlling the heating in a given stage, according to the corresponding time duration determined for the given stage.

11. The method as claimed in claim 8, comprising:
adding additional water to the rice during the keeping warm stage; and
heating the rice with the added additional water during the keeping warm stage.

12. The method as claimed in claim 11, wherein, before adding the water, the amount of water to be added is determined according to at least one of:
the amount of rice that has been cooked and kept warm;
the duration for which the rice has been kept warm;
and the heating lasts a period corresponding to the duration for which the rice has been kept warm.

## Patentansprüche

1. Vorrichtung zum Kochen von Reis, umfassend:
einen ersten Behälter (11) zum Enthalten des Reises und des Wassers;
ein erstes Heizelement (12) zum Erhitzen des Reises und des Wassers im ersten Behälter (11);
eine erste Einheit (10) zum Erhalten von Informationen in Bezug auf den Reis;
eine zweite Einheit (15) zum Bestimmen der Menge von Wasser, die im Erhitzungsprozess gemäß diesen Informationen verwendet werden muss;
einen Regler (13) zum Regeln der Menge von Wasser im ersten Behälter während des Erhitzens, wobei der Regler eine Nachfülleinheit zum Nachfüllen von Wasser in den ersten Behälter und einen mit dem ersten Behälter (11) verbundenen Ableiter zum Ableiten von mindestens einem Teil des Wassers aus dem ersten Behälter (11) umfasst,
wobei der Erhitzungsprozess verschiedene Stufen umfasst, enthaltend mindestens eine der nachstehenden:
eine Stufe des Auslaugens von Amylose, definiert durch einen Temperaturbereich, in dem das Auslaugen der Amylose das Hauptphänomen ist;
eine Stufe des Anpastens von Amylose, definiert durch einen Temperaturbereich, in dessen Bereich das Anpasten der Amylase das Hauptphänomen ist;
eine Stufe der Wasserabsorption durch das Amylopektin, definiert durch einen Temperaturbereich, in dessen Bereich die Wasserabsorption durch das Amylopektin das Hauptphänomen ist;
eine Kochstufe, definiert durch eine Temperatur, bei der das Wasser gekocht wird; und
eine Warmhaltestufe, in der der Reis gekocht worden ist und erhitzt wird, um warm gehalten zu werden;
wobei die zweite Einheit zum Bestimmen der Menge von Wasser dient, das in den verschiedenen Stufen zu verwenden ist,
wobei der Regler zum Regeln der Menge von Wasser den verschiedenen Stufen dient,
wobei, wenn die Menge von Wasser im ersten Behälter (11), das für die vorausgehende Stufe verwendet wurde, die für die gegenwärtige Stufe bestimmte Menge von Wasser übersteigt, der Ableiter angepasst ist, um das Wasser aus dem Behälter so abzuleiten, um die bestimmte Menge von Wasser zu erreichen; und
wobei, wenn die Menge von Wasser im ersten Behälter (11) weniger ist als die für die vorgegebene Stufe bestimmte Menge, die Nachfülleinheit angepasst ist, um während der vorgegebenen Stufe Wasser in den Behälter nachzufüllen.

2. Vorrichtung nach Anspruch 1, wobei der Erhitzungsprozess jede dieser Stufen umfasst.

3. Vorrichtung nach Anspruch 1 oder 2, wobei die erste Einheit (10) verwendet wird zum Erhalten als die Informationen in Bezug auf den Reis von mindestens einer der nachstehenden:
Merkmale des Reises;
Zielgeschmäcke des gekochten Reises.

4. Vorrichtung nach einem der Ansprüche 1 bis 3, wobei die Nachfülleinheit weiter einen zweiten Behälter (19) zum Enthalten von Wasser zum Nachfüllen in den ersten Behälter umfasst, und wobei die Vorrichtung weiter ein zweites Heizelement (16) zum Erhitzen von Wasser im zweiten Behälter (19) umfasst.

5. Vorrichtung nach Anspruch 4, wobei der zweite Behälter (19) über dem ersten Behälter (11, 110) entweder auf feste oder auf abnehmbare Art und Weise angeordnet ist, und wobei die Nachfülleinheit weiter umfasst:
einen Verteilungsmechanismus zum Verteilen von Wasser in den ersten Behälter (11, 110); und
ein Ventil zum Erlauben, dass Wasser im zweiten Behälter (19) in den Verteilungsmechanismus fließt.

6. Vorrichtung nach Anspruch 5, weiter umfassend:
einen dritten Behälter (20) zum Enthalten von Wasser, der mit dem zweiten Behälter (19) verbunden ist; und
einen Durchflussregler zum Steuern der Abgabe von Wasser vom zweiten Behälter (19) an den dritten Behälter (23) und umgekehrt.

7. Vorrichtung nach Anspruch 6, wobei:
der Durchflussregler angepasst ist, um eine vorgegebene Menge von Wasser von dem dritten Behälter (23) an den zweiten Behälter (19) abzugeben;
das zweite Heizelement angepasst ist, um die vorgegebene Menge von Wasser im zweiten Behälter (19) zu erhitzen; und
die Nachfülleinheit angepasst ist, um das erhitzte Wasser vom zweiten Behälter in den ersten Behälter nachzufüllen.

8. Verfahren zum Kochen von Reis unter Verwendung einer Vorrichtung nach einem der Ansprüche 1 bis 7, umfassend:
Erhalten (S20) von Informationen in Bezug auf den Reis;
Erhitzen (S22) des Reises und des Wassers in einem Behälter; und
während des Erhitzungsprozesses (S22), Regeln (S24) der Menge von Wasser gemäß diesen Informationen,
wobei der Schritt des Regelns (S24) die Menge von Wasser regelt durch mindestens eines von:
Ablassen von mindestens einem Teil des Wassers aus dem Behälter;
Nachfüllen von Wasser in den Behälter.

9. Verfahren nach Anspruch 8, wobei, vor Nachfüllen von Wasser, das Verfahren weiter einen Schritt des Bestimmens der Temperatur von nachzufüllendem Wasser und des Zeitpunkts, zu dem das Wasser nachzufüllen ist, umfasst, und einen Schritt des Erhitzens des nachzufüllenden Wassers auf die bestimmte Temperatur und des Nachfüllens des erhitzten Wassers zum bestimmten Zeitpunkt.

10. Verfahren nach Anspruch 8, wobei das Verfahren weiter umfasst die Schritte:
Bestimmen der Zeitdauer für jede der Stufen respektive gemäß den Informationen in Bezug auf den Reis; und
Steuern des Erhitzens in einer vorgegebenen Stufe gemäß der für die vorgegebene Stufe bestimmte Zeitdauer.

11. Verfahren nach Anspruch 8, umfassend:
Nachfüllen von zusätzlichem Wasser zum Reis während der Warmhaltestufe; und
Erhitzen des Reises mit dem nachgefüllten zusätzlichen Wasser während der Warmhaltestufe.

12. Verfahren nach Anspruch 11, wobei, vor Nachfüllen des Wassers, die Menge von nachzufüllendem Wasser bestimmt wird gemäß mindestens einem von:
der Menge von Reis, die gekocht und warm gehalten wurde;
der Dauer, während der der Reis warm gehalten wurde; und
wobei das Erhitzen einen Zeitraum andauert, der der Dauer entspricht, für die der Reis warm gehalten wurde.

## Revendications

1. Dispositif pour faire cuire du riz, comprenant :
un premier récipient (11) pour contenir le riz et de l'eau ;
un premier dispositif de chauffage (12) pour chauffer le riz et l'eau dans le premier récipient (11) ;
une première unité (10) pour obtenir des informations liées au riz ;
une seconde unité (15) pour déterminer la quantité d'eau à utiliser dans le processus de chauffage selon lesdites informations ;
un régulateur (13) pour, pendant le chauffage, réguler la quantité d'eau dans le premier récipient, dans lequel le régulateur comprend une unité d'ajout pour ajouter de l'eau dans le premier récipient et un égouttoir relié au premier récipient (11) pour égoutter au moins une partie de l'eau depuis le premier récipient (11),
dans lequel le processus de chauffage comprend des phases différentes incluant au moins une de ce qui suit :
une phase de lixiviation d'amylose, définie par une plage de températures, plage dans laquelle la lixiviation de l'amylose est le phénomène principal ;
une phase d'empâtage d'amylose, définie par une plage de températures, plage dans laquelle l'empâtage de l'amylase est le phénomène principal ;
une phase d'absorption aqueuse d'amylopectine, définie par une plage de températures, plage dans laquelle l'absorption aqueuse de l'amylopectine est le phénomène principal ;
une phase d'ébullition, définie par une température à laquelle l'eau est bouillie ; et
une phase de maintien au chaud, dans laquelle le riz a été cuit et est chauffé pour être maintenu chaud ;
dans lequel la seconde unité sert à déterminer la quantité d'eau à utiliser dans les différentes phases,
dans lequel le régulateur sert à réguler la quantité d'eau dans les différentes phases,
dans lequel lorsque la quantité d'eau dans le premier récipient (11) utilisée pour la phase précédente dépasse la quantité d'eau déterminée pour la phase actuelle, l'égouttoir est conçu pour égoutter l'eau depuis le récipient afin de satisfaire à la quantité déterminée d'eau ; et
dans lequel lorsque la quantité d'eau dans le premier récipient (11) est inférieure à la quantité déterminée pour la phase donnée, l'unité d'ajout est conçue pour ajouter de l'eau au récipient pendant la phase donnée.

2. Dispositif selon la revendication 1, dans lequel le processus de chauffage comprend chacune desdites phases.

3. Dispositif selon la revendication 1 ou 2, dans lequel ladite première unité (10) est utilisée pour obtenir, en tant que dites informations liées au riz, au moins l'une de ce qui suit :
des particularités du riz ;
des goûts cibles du riz cuisiné.

4. Dispositif selon l'une quelconque des revendications 1 à 3, dans lequel ladite unité d'ajout comprend en outre un deuxième récipient (19) pour contenir de l'eau à ajouter au premier récipient, et ledit dispositif comprend en outre un second dispositif de chauffage (16) pour chauffer l'eau dans le deuxième récipient (19).

5. Dispositif selon la revendication 4, dans lequel ledit deuxième récipient (19) est disposé au-dessus dudit premier récipient (11, 110) soit d'une manière fixe soit d'une manière détachable et ladite unité d'ajout comprend en outre :
un mécanisme d'épandage pour l'épandage de l'eau dans le premier récipient (11, 110) ; et
une vanne, pour permettre à l'eau dans le deuxième récipient (19) de s'écouler jusque dans le mécanisme d'épandage.

6. Dispositif selon la revendication 5, comprenant en outre :
un troisième récipient (20) pour contenir de l'eau et qui est relié audit deuxième récipient (19) ; et
une unité de commande de flux pour commander la délivrance d'eau depuis ledit deuxième récipient (19) au troisième récipient (23) et vice-versa.

7. Dispositif selon la revendication 6, dans lequel :
l'unité de commande de flux est conçue pour délivrer une quantité donnée d'eau depuis ledit troisième récipient (23) audit deuxième récipient (19) ;
le second dispositif de chauffage est conçu pour chauffer la quantité donnée d'eau dans le deuxième récipient (19) ; et
l'unité d'ajout est conçue pour ajouter l'eau chauffée en provenance du deuxième récipient jusque dans le premier récipient.

8. Procédé pour faire cuire du riz en utilisant un dispositif selon l'une quelconque des revendications 1 à 7, comprenant :
l'obtention (S20) d'informations liées au riz ;
le chauffage (S22) du riz et d'eau dans un récipient ; et
pendant le processus de chauffage (S22), la régulation (S24) de la quantité d'eau selon lesdites informations,
dans lequel ladite étape de régulation (S24) régule la quantité d'eau par au moins l'un de :
égouttage d'au moins une partie de l'eau depuis le récipient ; ajout d'eau dans le récipient.

9. Procédé selon la revendication 8, dans lequel, avant l'ajout d'eau, le procédé comprend en outre une étape de détermination de la température d'eau à ajouter et le point dans le temps lorsque l'eau doit être ajoutée, et une étape de chauffage de l'eau à ajouter à la température déterminée et d'ajout de l'eau chauffée au point dans le temps déterminé.

10. Procédé selon la revendication 8, dans lequel le procédé comprend en outre les étapes de :
détermination de la durée de temps respectivement pour chacune des phases, selon lesdites informations liées au riz ; et
commande du chauffage dans une phase donnée, selon la durée de temps correspondante déterminée pour la phase donnée.

11. Procédé selon la revendication 8, comprenant :
l'ajout d'eau supplémentaire au riz pendant la phase de maintien au chaud ; et
le chauffage du riz avec l'eau supplémentaire ajoutée pendant la phase de maintien au chaud.

12. Procédé selon la revendication 11, dans lequel, avant d'ajouter de l'eau, la quantité d'eau à ajouter est déterminée selon au moins l'une de :
la quantité de riz qui a été cuit et maintenu chaud ;
la durée pendant laquelle le riz a été maintenu chaud ;
et le chauffage dure une période correspondant à la durée pendant laquelle le riz a été maintenu chaud.
